(19) Europäisches Patentamt
European Patent Office
Office européen des brevets

(11) Veröffentlichungsnummer: **0 331 941 B1**

(12) ## EUROPÄISCHE PATENTSCHRIFT

(45) Veröffentlichungstag der Patentschrift: **19.05.93**

(51) Int. Cl.5: **C08G 18/48**, C08G 18/40, C08G 18/10, C08G 18/12

(21) Anmeldenummer: **89102703.9**

(22) Anmeldetag: **17.02.89**

Die Akte enthält technische Angaben, die nach dem Eingang der Anmeldung eingereicht wurden und die nicht in dieser Patentschrift enthalten sind.

(54) **Verfahren zur Herstellung von kalthärtenden Polyurethan–Weichformschaumstoffen mit hervorragenden Dämpfungseigenschaften.**

(30) Priorität: **01.03.88 DE 3806476**

(43) Veröffentlichungstag der Anmeldung:
**13.09.89 Patentblatt 89/37**

(45) Bekanntmachung des Hinweises auf die Patenterteilung:
**19.05.93 Patentblatt 93/20**

(84) Benannte Vertragsstaaten:
**BE DE ES FR GB IT NL SE**

(56) Entgegenhaltungen:
**US–A– 3 857 800**
**US–A– 3 865 762**
**US–A– 4 008 189**

(73) Patentinhaber: **BAYER AG**

**W–5090 Leverkusen 1 Bayerwerk(DE)**

Patentinhaber: **MILES INC.**
**One Mellon Center 500 Grant Str.**
**Pittsburgh, PA 15219–2502(US)**

(72) Erfinder: **Gansen, Peter, Dr.**
**Roggendorfstrasse 57**
**W–5000 Köln 80(DE)**
Erfinder: **Wolfgramm, Rudi**
**Flurstrasse 72**
**W–5090 Leverkusen 1(DE)**
Erfinder: **Wolf, Klaus–Dieter, Dr.**
**Andreas Gryphius Strasse 22**
**W–5000 Köln 80(DE)**
Erfinder: **Lindsey,John J.**
**459 Austin Avenue**
**Pittsburgh,PA 15243(US)**

(74) Vertreter: **Müller, Gerhard, Dr. et al**
**BAYER AG Konzernverwaltung RP Patentab-teilung**
**W–5090 Leverkusen 1 Bayerwerk (DE)**

EP 0 331 941 B1

**Beschreibung**

Kalthärtende Polyurethan–Weichformschaumstoffe werden üblicherweise zur Herstellung von Polsterelementen eingesetzt. Die Elastizität der konventionellen Kaltschäume macht sie für einen Einsatz als Sitzkissen geeignet. Unter Einsatz spezieller, Weichformschaum–untypischer Rohstoffkombinationen kann man kalthärtende Polyurethanschäume herstellen, die im Gegensatz zu den üblichen Kaltschäumen ein günstiges Dämpfungsverhalten aufweisen. Diese sog. "müden" Schäume sind zu Schallschutzzwecken und für alle Anwendungen, die gute Dämpfung erfordern, geeignet.

Die offenzelligen Polyurethanschäume mit hohem Strömungswiderstand erfüllen die Anforderungen eines Akustikers an einen Luftschallabsorber (vgl. H. Schmidt: Schalltechnisches Wörterbuch, Düsseldorf 1984). Die Luftschallabsorption, die durch äußere Reibung an Grenzflächen entsteht, wird im wesentlichen durch die Zellstruktur und die Offenporigkeit eines Schaumes determiniert. Diese Schaumeigenschaften lassen sich bei kalthärtenden Polyurethan–Weichformschaumstoffen in gewissen Grenzen einstellen, ohne die Basisrohstoffe, d.h. Polyol und Isocyanat verändern zu müssen. Die Offenporigkeit allein reicht für eine Absorption im unteren Frequenzbereich nicht aus – insbesondere zur Körperschallabsorption muß das Gerüst des Polyurethanweichschaumes über eine intensive Dämpfung verfügen.

Das Dämpfungsverhalten, welches durch den Verlustfaktor charakterisiert wird, kann bei Polyurethanschaumstoffen, insbesondere durch den Einsatz spezieller Polyole und/oder Isocyanate deutlich verbessert werden. Die DE–AS 2 751 774 beschreibt z.B. ein schalldämmendes Verbundsystem, das als Feder in einem Masse/Feder–System einen Polyurethanweichschaumstoff enthält. Der dort beschriebene Weichschaumstoff hat ein gutes Dämpfungsverhalten, wodurch der Koinzidenzeinbruch in einen Frequenzbereich zwischen 150 bis 10.000 Hz vermieden wird. Erreicht wird die gute Dämpfung durch eine Rohstoffkombination, welche etwa 20 % Hartschaumpolyol mit einer Hydroxylzahl von etwa 400 und 80 % eines Weichschaumpolyols mit einer Hydroxylzahl von etwa 50 beinhaltet. Eine zusätzliche Dämm– und Dämpfungswirkung wird durch den Einsatz von Schwerspat als anorganischem Zuschlagstoff erreicht.

Die DE–OS 3 313 624 beschreibt eine Rohstoffkombination, deren hydroxylhaltige Komponente u.a. mindestens zwei verschiedene Polyetherpolyole enthält. Eines dieser Polyole muß eine OH–Zahl von 180 bis 400 haben und in einer Konzentration von mindestens 15 Gew.–% im Polyolgemisch vorliegen. Man kann damit Polyurethanweichschäume mit. Elastizitätsmodulen von etwa $5 \cdot 10^5$ N/m² und Verlustfaktoren von etwa 0,35 herstellen.

Die Aufgabe der vorliegenden Erfindung bestand darin, eine Rahstoffkombination aufzufinden, welche die Herstellung von hochdämpfenden Schaumstoffen gestattet; darunter versteht man Schaumstoffe, deren Verlustfaktoren mindestens einen Wert von 0,5 haben, bevorzugt aber Verlustfaktorwerte größer als 0,9 erreichen.

Diese Aufgabe konnte Überraschenderweise, wie nachstehend erläutert, erfindungsgemäß gelöst werden. Gegenstand der Erfindung ist ein Verfahren zur Herstellung von kalthärtenden Polyurethan–Weichformschaumstoffen mit hervorragenden Dämpfungseigenschaften durch Umsetzung von Polyisocyanaten mit

a) mindestens einem mindestens zwei OH–Gruppen aufweisenden Polyether einer OH–Zahl von 20 bis 60 auf Basis von 75 bis 95 Gew.–% Propylenoxid und 5 bis 25 Gew.–% Ethylenoxid und

b) einem mindestens difuktionellen Polyether einer OH–Zahl von 150 bis 400 auf Basis Propylenoxid und ggf. Ethylenoxid.

in Gegenwart von Wasser und gegebenenfalls organischen Treibmitteln, Katalysatoren und Schaumstabilisatoren und gegebenenfalls weiteren Hilfs– und Zusatzmitteln, dadurch gekennzeichnet, daß zusätzlich zu den Polyolkomponenten a) und b) als weitere Polyetherkomponente

c) ein Polyether einer OH–Zahl von 20 bis 200 und einer von zwei bis sechs reichenden Funktionalität auf Basis von Propylenoxid und Ethylenoxid mit einem Ethylenoxidgehalt von über 50 Gew.–%, bezogen auf Propylenoxid und Ethylenoxid, in einer Konzentration von > 30% bezogen auf a) + b) + c)

verwendet wird.

Bevorzugt ist ein Verfahren, das dadurch gekennzeichnet ist, daß das Polyisocyanat mit der Polyetherkomponente c) in einer ersten Stufe zu einem Isocyanatgruppen aufweisenden Prepolymeren umgesetzt wird, welches dann anschließend mit den Polyol–Komponenten a) und b) in Gegenwart von Wasser und/oder organischen Treibmitteln, Katalysatoren und Schaumstabilisatoren und gegebenenfalls weiteren Hilfs– und Zusatzmitteln weiter umgesetzt wird.

Bevorzugt ist auch ein Verfahren, das darin besteht, daß das polyisocyanat mit der Polyetherkomponente a) in einer ersten Stufe zu einem Isocyanatgruppen aufweisenden Prepolymeren umgesetzt wird, welches dann anschließend mit den Komponenten c) und b) in Gegenwart von Wasser und/oder organi–

2

EP 0 331 941 B1

schen Treibmitteln, Katalysatoren und Schaumstabilisatoren und gegebenenfalls weiteren Hilfs− und Zusatzmitteln weiter umgesetzt wird.

Bevorzugt ist ferner ein Verfahren, wonach die drei OH−Gruppen aufweisenden Komponenten a), b) und c) mit geringen Anteilen Polyisocyanat zu einem Hydroxylgruppen aufweisenden Prepolymeren umgesetzt werden, welches dann anschließend mit dem Polyisocyanat in Gegenwart von Wasser und/oder organischen Treibmitteln, Katalysatoren und Schaumstabilisatoren und gegebenenfalls weiteren Hilfs− und Zusatzmitteln weiter umgesetzt wird.

Vorzugsweise wird die Polyolkomponente b) in einer Menge von 10 bis 20 Gew.−%, bezogen auf die Polyolkomponenten a), b) und c), und die Polyetherkomponente c) in einer Menge von 30 bis 70 Gew.−%, bezogen auf die Polyetherkomponenten a), b) und c), verwendet.

Die Polyetherkomponente c) weist vorzugsweise eine OH−Zahl von 25 bis 100 auf.

Als Polyisocyanate werden erfindungsgemäß vorzugsweise aromatische Polyisocyanate eingesetzt. Die Polyetherkomponente a) weist bevorzugt erfindungsgemäß eine OH−Zahl von 25 bis 40 auf.

Schließlich ist bevorzugt, daß die OH−Gruppen aufweisende Komponente b) ein mindestens trifunktioneller Polyether einer OH−Zahl von 150 bis 400 auf Basis von Propylenoxid ist.

Zur Herstellung der Polyurethan−Weichformschaumstoffe werden erfindungsgemäß als Ausgangskomponenten beispielsweise verwendet:

1. Polyisocyanate vom Typ des Diphenylmethandiisocyanats und/oder des Toluylendiisocyanats, z. B. das 2,4− und 2,6−Toluylendiisocyanat, sowie beliebige Gemische dieser Isomeren ("TDI"); 4,4'− und/oder 2,4'−Diphenylmethandiisocyanat (MDI), Hexamethylendiisocyanat und/oder Isophorondiisocyanat, Polyphenylpolymethylen−polyisocyanate, wie sie durch Anilin−Formaldehyd−Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen oder Biuretgruppen modifizierte Polyisocyanate, die sich vom 2,4−und/oder 2,6−Toluylendiisocyanat bzw. vom 4,4'−und/oder 2,4'Dipenylmethandiisocyanat und/oder Hexamethylendiisocyanat und/oder Isophorondiisocyanat ableiten, ferner alkylsubstituierte MDI−Typen, wie sie beispielsweise in DE−OS 2 935 318, DE−OS 3 032 128 und DE−OS 3 032 358 beschrieben werden.

Als erfindungsgemäß einzusetzende Polyisocyanate kommen vorzugsweise folgende MDI−Typen in Betracht:

a) Diphenylmethandiisocyanate im Gemisch mit Polyphenyl−polymethylen−polyisocyanaten, wobei der Anteil des Polyphenylpolymethylen−polyisocyanates 0 bis 40 Gew.−% und der Gehalt an Diphenylmethandiisocyanat−Isomeren 100 bis 60 Gew.−% betragen kann.

b) Urethanmodifizierte aromatische Di−/Poly−isocyanate mit einem NCO−Gehalt von 15 bis 30 Gew.−%, welche erhalten werden durch Umsetzung einer wie unter a) beschriebenen Mischung aus Diphenylmethandiisocyanaten und Polyphenyl−polymethylen−polyisocyanaten mit einer Hydroxylverbindung, gegebenenfalls auch mehreren Hydroxylverbindungen, deren Funktionalität 2 bis 6 beträgt.

c) Gemische der unter a) und/oder b) bezeichneten MDI−Produkte mit maximal 25 Gew.−% aliphatischen, cycloaliphatischen, heterocyclischen oder weiteren andersartigen aromatischen Polyisocyanaten, wie sie z.B. von W. Siefken in Justus Liebigs Annalen der Chemie, 562, Seiten 75 bis 136, beschrieben werden.

2. Mischungen aus drei Polyolen mit jeweils mindestens zwei reaktionsfähigen OH−Gruppen.

Bei der ersten Komponente a) handelt es sich um ein weichformschaumtypisches Polyetherpolyol, welches üblicherweise di− bis hexafunktionell ist, einen OH−Zahlbereich von 25 bis 60 abdeckt und endständig mit Ethylenoxid getippt ist.

Bei der zweiten Komponente b) kommen meist Polyetherpolyole auf der Basis von Propylenoxid zur Anwendung. Polyester und Polyetherpolyole mit geringen Anteilen an Ethylenoxid sind ebenfalls geeignet. Neben den bevorzugt eingesetzten trifunktionellen Polyolen können auch lineare und höherfunktionelle Typen eingesetzt werden.

Der dritte Bestandteil der Polyolabmischung ist ein Polyetherpolyol c) einer OH−Zahl von 20 bis 200, einer von zwei bis sechs reichenden Funktionalität und einem hohen Ethylenoxid−Anteil. Die weichformschaumtypischen Polyetherpolyole enthalten neben Propylenoxid Ethylenoxid in einer Konzentration, welche in der Regel 20 % nicht übersteigt. Für den erfindungsgemäßen hochdämpfenden Schaum ist aber ein Polyetherpolyol c) mit hohen Ethylenoxid−Anteilen (größer 50 Gew.−%) Voraussetzung. Um die gewünschte hohe Dämpfung zu erreichen, muß die notwendige Konzentration dieses Polyols 30 %, bezogen auf die Polyolkomponenten a), b) und c), überschreiten.

3. Gegebenenfalls Verbindungen mit mindestens zwei gegenüber Isocyanaten reaktionsfähigen Wasserstoffatomen und einem Molekulargewicht von 32 bis 399. Man versteht hierunter Hydroxylgruppen

EP 0 331 941 B1

und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenver – längerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE – OS 2 832 253, Seiten 10 bis 20, beschrieben.

4. Wasser als Treibmittel, vorzugsweise in einer Menge von 1 bis 4 Gew. – Teilen pro 100 Gew. – Teile Polyolmischung a) + b) + c).

5. Gegebenenfalls Hilfs – und Zusatzmittel wie

a) leicht flüchtige organische Substanzen als weitere Treibmittel,

b) Reaktionsbeschleuniger und Reaktionsverzögerer der an sich bekannten Art in der an sich üblichen Menge,

c) oberflächenaktive Zusatzstoffe, wie Emulgatoren und Schaumstabilisatoren,

ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trichloreth – ylphosphat, Trikresylphosphat, ferner Stabilisatoren gegen Alterungs – und Witterungseinflüsse, Weichmacher und fungistatisch und bakterostatisch wirkende Substanzen sowie Füllstoffe wie Ba – riumsulfat, Kieselgut, Ruß oder Schlämmkreide.

Diese gegebenenfalls mitzuverwendenden Hilfs – und Zusatzstoffe werden beispielsweise in der DE – OS 2 732 292, Seiten 21 – 24, beschrieben.

Weitere Beispiele von gegebenenfalls erfindungsgemäß mitzuverwendenden oberflächenaktiven Zu – satzstoffen und Schaumstabilisatoren sowie Zellreglern, Reaktionsverzögerern, Stabilisatoren, flammhem – menden Substanzen, Weichmachern, Farbstoffen und Füllstoffen sowie fungistatisch und bakteriostatisch wirksamen Substanzen sowie Einzelheiten über Verwendungs – und Wirkungsweise dieser Zusatzmittel sind im Kunststoff – Handbuch, Band VII, herausgegeben von Vieweg und Höchtlen, Carl – Hanser – Verlag, München 1966, z B. auf den Seiten 103 – 113 beschrieben.

Durchführung des erfindungsgemäßen Verfahrens:

Die Reaktionskomponenten werden erfindungsgemäß nach dem an sich bekannten Einstufenverfahren, dem Präpolymerverfahren oder dem Semiprépolymerverfahren zu Umsetzung gebracht, wobei man sich oft maschineller Einrichtungen bedient, z.B. solcher, die in der US – Patentschrift 2 764 565 beschrieben werden. Einzelheiten über Verarbeitungseinrichtungen, die auch erfindungsgemäß infrage kommen, werden in Kunststoff – Handbuch, Band VII, herausgegeben von Vieweg und Höchtlen, Carl – Hanser – Verlag, München 1966, z. B. auf den Seiten 121 – 205, beschrieben.

Die Umsetzung aller Komponenten erfolgt erfindungsgemäß bei einer Kennzahl über 70, vorzugsweise bei einer Kennzahl von 70 bis 115.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaum – stoff als mit der Kennzahl 100 gefertigt zu betrachten, bei welchem die den stöchiometrischen Verhältnis – sen entsprechende, bzw. die theoretisch notwendige Menge an Isocyanat benutzt wurde. Mit Hilfe der Kennzahl ist es also möglich, den Grad der Unter – oder Übervernetzung näher zu definieren. Die Kennzahl errechnet sich nach der allgemeinen Formel wie folgt:

$$\text{Kennzahl} = \frac{\text{Isocyanatmenge (praktisch)} \times 100}{\text{Isocyanatmenge (theoretisch)}}$$

Erfindungsgemäß wird die Verschäumung in geschlossenen Formen durchgeführt. Dabei wird das Reaktionsgemisch in eine Form eingetragen. Als Formmaterial kommt Metall, z.B. Aluminium oder Kunst – stoff, z.B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird somit unter "over – charging" gearbeitet; eine derartige Verfahrensweise ist z.B. aus den US – Patentschriften 3 178 490 und 3 182 104 bekannt.

Die günstigen Eigenschaften der erfindungsgemäßen Polyurethanschäume werden durch die besondere Zusammensetzung der Polyolkomponente erreicht. Es sind zwar bestimmte Abmischungen (z.B. Beispiel 1)

4

instabil und entmischen sich innerhalb von Stunden. Lagerstabile A/B − Systeme konnten aber durch eine vorgelagerte Prepolymerisierungsreaktion erhalten werden. Diese Systeme haben verarbeitungstechnische Vorteile. Drei Prepolymerisierungsverfahren wurden angewendet, um eine Entmischung der Polyolkompo − nente zu verhindern.

- − Herstellung eines NCO − haltigen Prepolymeren durch Vorreaktion von Anteilen oder von der Ge − samtmenge des Polyethers c) im Isocyanat. Es haben sich Prepolymere bewährt, deren NCO − Gehalt zwischen 10 und 20 % liegt.
- − Herstellung eines NCO − haltigen Prepolymeren durch Vorreaktion des Weichformschaumpolyols a) mit dem Isocyanat. Die Komponente b) ist mit dem ethylenoxidreichen Polyol mischbar; aus diesem Grund lassen sich stabile Formulierungen herstellen.
- − Herstellung eines OH − funktionellen Prepolymers durch Umsetzung der Polyolmischung mit geringen Teilen Isocyanat. Die Vorvernetzung verhindert die Phasenseparierung. Die zugegebene Isocyanat − menge wird so dosiert, daß einerseits die Viskosität des Polyols in einem verarbeitbaren Rahmen bleibt und andererseits eine Entmischung vermieden wird.

Die erfindungsgemäß hergestellten Weichformschaumstoffe liegen in einem Rohdichtebereich von 25 bis 250 kg/m$^3$, wobei Verlustfaktoren von über 0,8 ohne den Zusatz von anorganischen und/oder organi − schen Füllstoffen erreicht werden. Die Polyurethanschaumstoffe können in Abhängigkeit von der Kennzahl und Treibmittelgehalt weich bis hart eingestellt werden, ohne ihre Flexibilität zu verlieren.

Als mögliche Anwendungen der erfindungsgemäß hergestellten hochdämpfenden Schaumstoffe kom − men z.B. in Frage:

- − Als Feder in Masse − Feder − Systemen (Akustik)
  Heute gefertigte Automobile werden häufig zur Geräuschminderung im Fahrgastraum mit Teppich − bodenkonstruktionen, die aus einem Verbund aus Textilbelag, Schwermatte (Masse) und PU − Schaum (Feder) bestehen. Hochdämpfender Schaum kann die Resonanzeinbrüche bei niedrigen Frequenzen verhindern und wirkt gleichzeitig als Schallabsorptionsdedium.
- − Schallabsorption (Akustik)
  Ein hoher Verlustfaktor verbessert die guten Dämpfungseigenschaften von PU − Schaumstoffen.
- − Energieabsorption (z.B. Aufprallenergie)
  Die geringe Rückprallelastizität der erfindungsgemäß hergestellten Schaumstoffe (vgl. Beispiel 1) beweist die große Energieabsorption der erfindungsgemäß hergestellten Schaumstoffe.

Beispiel 1

Herstellung eines Polyurethanschaumstoffs aus:

**A-Komponente**
------------

25      Gew.-Teile eines mit Trimethylolpropan gestarteten Polyoxypropylenpolyoxyethylentriols mit 14 % endständig polymerisierten Oxyethylengruppen und einer OH-Zahl von 28 (Polyol A)

15      Gew.-Teile eines Trimethylolpropan gestarteten Polyoxypropylentriols mit einer OH-Zahl von 380 (Polyol B)

60      Gew.-Teile eines Glycerin gestarteten Polyoxypropylenpolyoxyethylentriols mit 10 % endständig polymerisierten Oxyethylengruppen, einem Gesamtgehalt an Oxyethylengruppen von 73 % und einer OH-Zahl von 36 (Polyol C)

2,0     Gew.-Teile Wasser

0,3     Gew.-Teile Dimethylethanolamin

0,6     Gew.-Teile Triethylendiamin (33 Gew.-% in Dipropylenglykol)

0,83 Gew.-Teile Bis-dimethylaminopropyl-amin

1,0     Gew.-Teile Triethanolamin

1,0     Gew.-Teile Silikonstabilisator B 4690 der Fa. Goldschmidt AG, Essen

B – Komponente
- - - - - - - - -

MDI 85/20:
Gemisch aus 65 % 4,4' und 20 % 2,4' – Diisocyanatodiphenylmethan und 15 % höherfunktionellen Polyisocyanaten der Diphenylmethanreihe.

100 Gew. – Teile der A – Komponente werden mit 45,5 Gew. – Teilen der B – Komponente intensiv vermischt (Kennzahl 86). Die Reaktionsmischung wird in eine auf 50 °C erwärmte, quaderförmige Metall – form eingebracht, die Form wird mit einem Metalldeckel geschlossen und die Reaktionsmischung schäumt auf.

Der sich ergebende Polyurethan – Weichformschaumstoff hat folgende mechanische Eigenschaften:

| Rohdichte (DIN 53 420) | 81 kg/m$^3$ |
| Zugfestigkeit (DIN 53 571) | 95 kPa |
| Bruchdehnung (DIN 53 571) | 140 % |
| Stauchhärte 40 % (DIN 53 577) | 4,4 kPa |
| Druckverformungsrest (50 %, 22 h, 70˚C, DIN 53 572) | 2,9 % |
| Rückprallelastizität (DIN 53 573) | 14 % |
| Verlustfaktor (bestimmt nach dem Hubschwingungsverfahren) | 0,88 |

Beispiel 2

A – Komponente

25 Gew. – Teile Polyol A
15 Gew. – Teile Polyol B
60 Gew. – Teile Polyol C
2,5 Gew. – Teile Wasser
0,3 Gew. – Teile Dimethylethanolamin
0,6 Gew. – Teile Triethylendiamin (33 Gew. – % in Dipropylenglykol)
0,83 Gew. – Teile Bis – dimethylaminopropyl – amin
1,0 Gew. – Teile Triethanolamin
1,0 Gew. – Teile Silikonstabilisator B 4900 der Fa. Goldschmidt AG, Essen.

B – Komponente

Abmischung aus 40 % TDI 65 und 60 % MDI roh
100 Gew. – Teile der A – Komponente werden mit 43,1 Gew. – Teilen der B – Komponente intensiv vermischt (Kennzahl 90). Die Reaktionsmischung wird in eine auf 50˚C erwärmte, quaderförmige Metallform einge – bracht, die Form wird mit einem Metalldeckel geschlossen und die Reaktionsmischung schäumt auf.
Eigenschaften des Polyurethanweichschaumstoffs:

| Rohdichte (DIN 53 420) | 78 kg/m$^3$ |
| Stauchhärte 40 % (DIN 53 571) | 10,1 kPa |
| Verlustfaktor (bestimmt nach dem Hubschwingverfahren) | 0,64 |

Beispiel 3

Herstellung eines Polyurethanweichschaumstoffs aus:

A – Komponente

25 Gew. – Teile Polyol A
15 Gew. – Teile Polyol B
60 Gew. – Teile Polyol C
2,5 Gew. – Teile Wasser
0,3 Gew. – Teile Dimethylethanolamin
0,6 Gew. – Teile Triethylendiamin (33 Gew. – % in Dipropylenglykol)
0,83 Gew. – Teile Bis – dimethylaminopropyl – amin
1,0 Gew. – Teile Silikonstabilisator B 4900 der Fa. Goldschmidt AG, Essen.

B – Komponente

Abmischung aus 90 % durch Teilurethanisierung und Teilallophanatisierung modifiziertes TDI und 10 % MDI roh mit einem NCO – Gehalt von etwa 40 %.

7

Aus 100 Gew.−Teilen Komponente A und 41,1 Gew.−Teilen Komponente B (Kennzahl 90) wird wie in Beispiel 1 ein Formteil mit folgenden Eigenschaften hergestellt:

| | |
|---|---|
| Rohdichte (DIN 53 420) | 82 kg/m$^3$ |
| Stauchhärte 40 % (DIN 53 571) | 3,9 kPa |
| Verlustfaktor (bestimmt nach dem Hubschwingverfahren) | 0,57 |

Beispiel 4

Die in den Beispielen 1 bis 3 aufgeführten Formulierungen sind phaseninstabil. Durch Prepolymerisierung des Weichformschaumpolyols (Polyetherkomponente a)) wird in Beispiel 4 eine phasenstabile Formulierung möglich.

40 Gew.−Teile eines mit Sorbit gestarteten Polyoxypropyloxyethylenpolyols einer OH−Zahl von 100 und 82,2 % endständigen Oxyethylengruppen (Polyol D).
40 Gew.−Teile Polyol C
20 Gew.−Teile Polyol B
3,33 Gew.−Teile Wasser
0,40 Gew.−Teile Triethylendiamin (33 Gew.−% in Dipropylenglykol)
0,67 Gew.−Teile Bis−dimethylaminopropyl−amin
0,40 Gew.−Teile Bis−dimethylaminopropyl−ether
0,27 Gew.−Teile Silikonstabilisator B 4900 (Goldschmidt AG, Essen)

B−Komponente

Durch Umsetzung von 80 Gew.−Teilen MDI 85/20 mit 20 Gew.−Teilen Polyol A entsteht ein Semiprepolymeres mit einem NCO−Gehalt von etwa 25 %. Die Reaktion wird bei Raumtemperatur unter ständigem Rühren ausgeführt. Nach 24 Stunden ist die Reaktion abgeschlossen.

Aus 100 Gew.−Teilen Komponente A und 91,5 Gew.−Teilen Komponente B (Kennzahl 70) wird wie in Beispiel 1 ein Formteil mit folgenden Eigenschaften hergestellt:

| | |
|---|---|
| Rohdichte (DIN 53 420) | 92 kg/m$^3$ |
| Stauchhärte 40 % (DIN 53 571) | 5,04 kPa |
| Verlustfaktor (bestimmt nach dem Hubschwingverfahren) | 1,09 |

Beispiel 5

Herstellung eines Polyurethanweichschaumstoffs aus

A−Komponente

102 Gew.−Teile eines OH−funktionellen Prepolymeren, welches wie folgt hergestellt wird. Aus
25 Gew.−Teilen Polyol A
15 Gew.−Teilen Polyol B
60 Gew.−Teilen Polyol C und
2 Gew.−Teilen MDI 85/20
wird unter ständigem Rühren eine über mehrere Wochen phasenstabile Flüssigkeit hergestellt (Reaktionszeit 24 h).
2,5 Gew.−Teile Wasser
0,6 Gew.−Teile Triethylendiamin (33 Gew.−% in Dipropylenglykol)
0,1 Gew.−Teile Bis−dimethylaminopropylether
1,0 Gew.−Teile Methyldicyclohexylamin
0,6 Gew.−Teile PU−Vernetzer 56 der Bayer AG
0,4 Gew.−Teile Silikonstabilisator B 4900 der Fa. Goldschmidt AG, Essen

B – Komponente
– – – – – – – – – –

MDI 85/20
100 Gew. – Teile der A – Komponente werden mit 43,8 Gew. – Teilen der B – Komponente intensiv vermischt (Kennzahl 80) und wie in Beispiel 1 in eine Metallform eingebracht.

Eigenschaftsniveau des Polyurethanschaumstoffs:

| | |
|---|---|
| Rohdichte (DIN 53 420) | 73,4 kg/m$^3$ |
| Stauchhärte 40 % (DIN 53 571) | 4,53 kPa |
| Verlustfaktor (bestimmt nach dem Hubschwingverfahren) | 1,01 |

**Patentansprüche**

1. Verfahren zur Herstellung von kalthärtenden Polyurethan – Weichformschaumstoffen mit hervorragen – den Dämpfungseigenschaften durch Umsetzung von Polyisocyanaten mit
   a) mindestens einem mindestens zwei OH – Gruppen aufweisenden Polyether einer OH – Zahl von 20 bis 60 auf Basis von 75 bis 95 Gew. – % Propylenoxid und 5 bis 25 Gew. – % Ethylenoxid und
   b) einem mindestens difunktionellen Polyether einer OH – Zahl von 150 bis 400 auf Basis Propylen – oxid und ggf geringen Anteilen zu Ethylenoxid.
   in Gegenwart von Wasser und gegebenenfalls organischen Treibmitteln, Katalysatoren und Schaum – stabilisatoren und gegebenenfalls weiteren Hilfs – und Zusatzmitteln, dadurch gekennzeichnet, daß zusätzlich zu den Polyolkomponenten a) und b) als weitere Polyetherkomponente
   c) ein Polyether einer OH – Zahl von 20 bis 200 und einer von zwei bis sechs reichenden Funktionalität auf Basis von Propylenoxid und Ethylenoxid mit einem Ethylenoxidgehalt von über 50 Gew. – %, bezogen auf Propylenoxid und Ethylenoxid, in einer Konzentration von > 30% bezogen auf a) + b) + c)
   verwendet wird, wobei die Umsetzung aller Komponenten bei einer Kennzahl von 70 bis 115 erfolgt.

2. Verfahren gemäß Anspruch 1, dadurch gekennzeichnet, daß das Polyisocyanat mit der Polyetherkom – ponente c) in einer ersten Stufe zu einem Isocyanatgruppen aufweisenden Prepolymeren umgesetzt wird, welches dann anschließend mit den Polyol – Komponenten a) und b) in Gegenwart von Wasser und/oder organischen Treibmitteln, Katalysatoren und Schaumstabilisatoren und gegebenenfalls weite – ren Hilfs – und Zusatzmitteln weiter umgesetzt wird.

3. Verfahren gemäß Anspruch 1 und 2, dadurch gekennzeichnet, daß das Polyisocyanat mit der Poly – etherkomponente a) in einer ersten Stufe zu einem Isocyanatgruppen aufweisenden Prepolymeren umgesetzt wird, welches dann anschließend mit den Komponenten c) und b) in Gegenwart von Wasser und/oder organischen Treibmitteln, Katalysatoren und Schaumstabilisatoren und gegebenenfalls weite – ren Hilfs – und Zusatzmitteln weiter umgesetzt wird.

4. Verfahren gemäß Anspruch 1 bis 3, dadurch gekennzeichnet, daß die drei OH – Gruppen aufweisenden Komponenten a), b) und c) mit geringen Anteilen Polyisocyanat zu einem Hydroxylgruppen aufweisen – den Prepolymeren umgesetzt werden, welches dann anschließend mit dem Polyisocyanat in Gegenwart von Wasser und/oder organischen Treibmitteln, Katalysatoren und Schaumstabilisatoren und gegebe – nenfalls weiteren Hilfs – und Zusatzmitteln weiter umgesetzt wird.

5. Verfahren gemäß Anspruch 1 bis 4, dadurch gekennzeichnet, daß die Polyolkomponente b) in einer Menge von 10 bis 20 Gew. – %, bezogen auf die Polyetherkomponenten a), b) und c) verwendet wird.

6. Verfahren gemäß Anspruch 1 bis 5, dadurch gekennzeichnet, daß die Polyetherkomponente c) in einer Menge von 30 bis 70 Gew. – %, bezogen auf die Polyolkomponenten a), b) und c) verwendet wird.

7. Verfahren gemäß Anspruch 1 bis 6, dadurch gekennzeichnet, daß die Polyetherkomponente c) eine OH – Zahl von 25 bis 100 aufweist.

**8.** Verfahren gemäß Anspruch 1 bis 7, dadurch gekennzeichnet, daß als Polyisocyanate aromatische Polyisocyanate eingesetzt werden.

**9.** Verfahren gemäß Anspruch 1 bis 8, dadurch gekennzeichnet, daß die Polyetherkomponente a) eine OH − Zahl von 25 bis 40 aufweist.

**10.** Verfahren gemäß Anspruch 1 bis 9, dadurch gekennzeichnet, daß die OH − Gruppen aufweisende Komponente b) ein mindestens trifunktioneller Polyether einer OH − Zahl von 150 bis 400 auf Basis von Propylenoxid ist.

**Claims**

**1.** A process for the production of cold − curing flexible moulded polyurethane foams having excellent damping properties by reaction of polyisocyanates with

a) at least one polyether containing at least two OH groups and having an OH value of 20 to 60 based on 75 to 95% by weight propylene oxide and 5 to 25% by weight ethylene oxide and

b) an at least difunctional polyether having an OH value of 150 to 400 based on propylene oxide and optionally ethylene oxide

in the presence of water and optionally organic blowing agents, catalysts and foam stabilizers and optionally other auxiliaries and additives, characterized in that, in addition to polyether components a) and b),

c) a polyether having an OH value of 20 to 200 and a functionality of two to six based on propylene oxide and ethylene oxide with an ethylene oxide content of more than 50% by weight, based on propylene oxide and ethylene oxide, in a concentration of > 30%, based on a) + b) + c),

is used as a further polyether component, the reaction of all the components taking place at an index of 70 to 115.

**2.** A process as claimed in claim 1, characterized in that the polyisocyanate is reacted with the polyether component c) in a first stage to form a prepolymer containing isocyanate groups which is then itself reacted with the polyol components a) and b) in the presence of water and/or organic blowing agents, catalysts and foam stabilizers and, optionally, other auxiliaries and additives.

**3.** A process as claimed in claims 1 and 2, characterized in that the polyisocyanate is reacted with the polyether component a) in a first stage to form a prepolymer containing isocyanate groups which is then itself reacted with the components c) and b) in the presence of water and/or organic blowing agents, catalysts and foam stabilizers and, optionally, other auxiliaries and additives.

**4.** A process as claimed in claims 1 to 3, characterized in that the three OH − functional components a), b) and c) are reacted with small amounts of polyisocyanate to form a prepolymer containing hydroxyl groups which is then itself reacted with the polyisocyanate in the presence of water and/or organic blowing agents, catalysts and foam stabilizers and, optionally, other auxiliaries and additives.

**5.** A process as claimed in claims 1 to 4, characterized in that the polyol component b) is used in a quantity of 10 to 20% by weight, based on the polyether components a), b) and c).

**6.** A process as claimed in claims 1 to 5, characterized in that the polyether component c) is used in a quantity of 30 to 70% by weight, based on the polyol components a), b) and c).

**7.** A process as claimed in claims 1 to 6, characterized in that the polyether component c) has an OH value of 25 to 100.

**8.** A process as claimed in claims 1 to 7, characterized in that aromatic polyisocyanates are used as the polyisocyanates.

**9.** A process as claimed in claims 1 to 8, characterized in that the polyether component a) has an OH value of 25 to 40.

**10.** A process as claimed in claims 1 to 9, characterized in that the OH – functional component b) is an at least trifunctional polyether having an OH value of 150 to 400 based on propylene oxide.

**Revendications**

**1.** Procédé de production de mousses moulables flexibles de polyuréthanne durcissant à froid, douées d'excellentes propriétés d'amortissement, par réaction de polyisocyanates avec

a) au moins un polyéther porteur d'au moins deux groupes OH, ayant un indice d'hydroxyle de 20 à 60, à base de 75 à 95 % en poids d'oxyde de propylène et de 5 à 25 % en poids d'oxyde d'éthylène et

b) un polyéther au moins difonctionnel ayant un indice d'hydroxyle de 150 à 400 à base d'oxyde de propylène et le cas échéant d'oxyde d'éthylène,

en présence d'eau et, le cas échéant, d'agents porogènes organiques, de catalyseurs et d'agents de stabilisation des mousses et, le cas échéant, d'autres substances auxiliaires et additifs, caractérisé en ce qu'on utilise, en plus des composants polyols a) et b) comme autre composant polyéther,

c) un polyéther d'indice d'hydroxyle allant de 20 à 200 et ayant une fonctionnalité allant de deux à six, à base d'oxyde de propylène et d'oxyde d'éthylène, avec une teneur en oxyde d'éthylène de plus de 50 % en poids par rapport aux oxydes de propylène et d'éthylène, à une concentration de plus de 30 % par rapport à la somme a) + b) + c),

la réaction de tous les composants étant conduite avec une caractéristique de 70 à 115.

**2.** Procédé suivant la revendication 1, caractérisé en ce que le polyisocyanate est amené à réagir avec le composant polyéther c) dans une première étape pour former un prépolymère porteur de groupes isocyanato, qui est ensuite mis en réaction avec les composants polyol a) et b) en présence d'eau et/ou d'agents porogènes organiques, de catalyseurs et d'agents de stabilisation de mousse et, le cas échéant, d'autres substances auxiliaires et additives.

**3.** Procédé suivant les revendications 1 et 2, caractérisé en ce que le polyisocyanate est amené à réagir avec le composant polyéther a) dans une première étape pour former un prépolymère porteur de groupes isocyanato que l'on fait ensuite réagir avec les composants c) et b) en présence d'eau et/ou d'agents porogènes organiques, de catalyseurs et d'agents de stabilisation de mousse et, le cas échéant, d'autres substances auxiliaires et additives.

**4.** Procédé suivant les revendications 1 à 3, caractérisé en ce qu'on fait réagir les trois composants a), b) et c) porteurs de groupes OH avec de faibles proportions de polyisocyanate pour former un prépoly – mère porteur de groupes hydroxyle que l'on fait ensuite réagir avec le polyisocyanate en présence d'eau et/ou d'agents porogènes organiques, de catalyseurs et d'agents de stabilisation de mousse et, le cas échéant, d'autres substances auxiliaires et additives.

**5.** Procédé suivant les revendications 1 à 4, caractérisé en ce que le composant polyol b) est utilisé en une quantité de 10 à 20 % en poids par rapport aux composants polyéther a), b) et c).

**6.** Procédé suivant les revendications 1 à 5, caractérisé en ce qu'on utilise le composant polyéther c) en une quantité de 30 à 70 % en poids par rapport aux composants polyol a), b) et c).

**7.** Procédé suivant les revendications 1 à 6, caractérisé en ce que le composant polyéther c) présente un indice d'hydroxyle de 25 à 100.

**8.** Procédé suivant les revendications 1 à 7, caractérisé en ce qu'on utilise comme polyisocyanates des polyisocyanates aromatiques.

**9.** Procédé suivant les revendications 1 à 8, caractérisé en ce que le composant polyéther a) présente un indice d'hydroxyle de 25 à 40.

**10.** Procédé suivant les revendications 1 à 9, caractérisé en ce que le composant b) porteur de groupes OH est un polyéther au moins trifonctionnel à base d'oxyde de propylène, ayant un indice d'hydroxyle de 150 à 400.